**Europäisches Patentamt**

**European Patent Office**

**Office européen des brevets**

(19)

(11) **EP 1 151 877 A1**

(12) # EUROPEAN PATENT APPLICATION

(43) Date of publication:
**07.11.2001 Bulletin 2001/45**

(51) Int Cl.⁷: $B60G\ 17/015$, $G01P\ 15/08$

(21) Application number: **00109399.6**

(22) Date of filing: **03.05.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (71) Applicant: **Bayerische Motoren Werke Aktiengesellschaft**<br>**80809 München (DE)**<br><br>(72) Inventor: **Munnix, Pascal**<br>**81929 München (DE)** |

(54) **A method of determining a yaw acceleration**

(57)     A method of determining the yaw acceleration ψ of a vehicle body 10 is disclosed, the method including the steps of:

measuring the transverse acceleration agv, agh of the body 10 at at least two positions, using transverse acceleration transducers 16, 18 spaced apart along a longitudinal axis C/L through the body 10;

determining the difference (agh - agv) in transverse acceleration between the two positions 18, 16; and

dividing said difference by the distance d between said positions.

Fig. 1

EP 1 151 877 A1

**Description**

This invention relates to methods of determining yaw acceleration and in particular to a method of determining a yaw acceleration of a body such as a vehicle.

It is know to provide a vehicle with a stability control system and some such stability control systems obtain their information about the driving situation from one or more of the following transducers; transverse acceleration, rotational speed of the wheels, front brake pressure, speed of the wheels and steering angle. Further or fewer transducers can also be used. A system of this general type is disclosed in EP 0 546 295.

In order to recognise situations where inputs from the transducers to a control means may be faulty, the quality of the signals from the transducers can be monitored. In systems which do this, the stability control is switched off on detection of a transducer fault.

In some driving situations, however, it is not always possible to determine with absolute certainty whether the form of the transducer signal is the result of a transducer failure or whether it has arisen through instability in the driving situation itself. Under such circumstances, it is possible that the controller might switch off the stability control because it suspects a transducer fault, although there is not actually any such fault at that time.

Problems with such systems are recognised in US 5,968,105 in which a process for finding the transverse acceleration of a vehicle using data supplied by wheel speed transducers is disclosed.

It is an object of this invention to provide an improved method of determining a yaw acceleration of a body.

Accordingly, the invention provides a method of determining a yaw acceleration of a body including the steps of:

> measuring the transverse acceleration of the body at at least two positions, using transverse acceleration transducers spaced apart along a longitudinal axis through the body;

> determining the difference in transverse acceleration between the two positions; and

> dividing said difference by the distance between said positions.

The method may include measuring the transverse acceleration at said two positions using transverse acceleration transducers arranged in use to react with opposite signs.

The method may include spacing said transducers apart by as far as is practical along said longitudinal axis.

The body may comprise a vehicle having a stability control system and the method may include providing a signal indicative of said yaw acceleration to a control means of said stability control system, such that said signal is used to assess the plausibility of one or more inputs of said stability control system. A said input may comprise a wheel speed input.

The invention will now be described by way of example only and with reference to the accompanying drawing, in which:

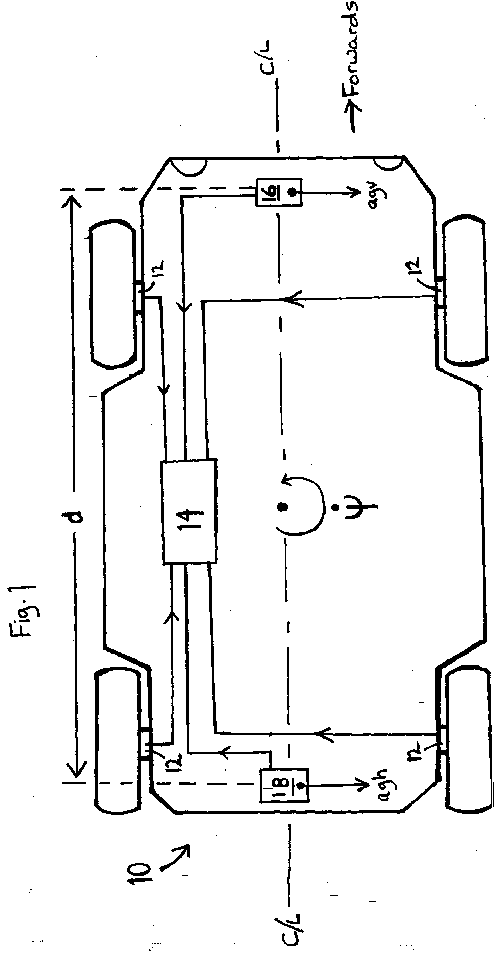

Figure 1 is a schematic diagram of a vehicle including an arrangement for determining a yaw rate $\dot{\Psi}$ in accordance with a method according to the invention.

Referring to the figure, a vehicle 10 includes a dynamic stability control system (DSC) in which a set of wheel speed transducers 12 provide a set of wheel speed inputs to a DSC controller 14. The DSC controller 14 also receives inputs "agv" and "agh" from a forwardly mounted transverse acceleration transducer 16 and a rearwardly mounted transverse acceleration transducer 18 respectively, which are spaced apart along a longitudinal axis substantially along the centre line C/L of the vehicle 10. The forward and rear transverse acceleration transducers 16, 18 are spaced apart as far as possible along the longitudinal axis and are arranged in use to react with opposite signs.

The DSC controller 14 determines a measure of the yaw rate $\dot{\Psi}$ by determining the vehicle's yaw acceleration $\ddot{\Psi}$, which the controller 14 derives from the difference between the transverse acceleration signals of the transducers 16, 18 in accordance with the following equation:

$$\ddot{\Psi} = \frac{agh - agv}{d}$$

where: "agh" is the transverse acceleration measured by the rearwardly mounted acceleration transducer 18; "agv" is the transverse acceleration measured by the forwardly mounted acceleration transducer 16; and "d" is the distance between the transducers 16, 18.

The yaw acceleration $\ddot{\Psi}$ is then tested by the controller 14 for plausibility with respect to the wheel speed.

By arranging the transverse acceleration transducers 16, 18 to react with opposite signs, it is possible to detect mistakes in the analogue to digital conversion of the signal level.

The method of this invention provides a quick and safe method of determining transducer faults, without the risk of erroneously switching off the DSC.

**Claims**

1.  A method of determining a yaw acceleration $\ddot{\psi}$ of a body (10) including the steps of:

    measuring the transverse acceleration (agv, agh) of the body (10) at at least two positions, using transverse acceleration transducers (16, 18) spaced apart along a longitudinal axis (C/L) through the body (10);

    determining the difference in transverse acceleration (agv, agh) between the two positions; and

    dividing said difference by the distance between said positions.

2.  A method according to Claim 1, including measuring the transverse acceleration (agv, agh) at said two positions using transverse acceleration transducers (16, 18) arranged in use to react with opposite signs.

3.  A method according to Claim 1 or 2, including spacing said transducers (16,18) apart by as far (d) as is practical along said longitudinal axis (C/L).

4.  A method according to any preceding claim, the body comprising a vehicle (10) having a stability control system and the method including providing a signal indicative of said yaw acceleration $\ddot{\psi}$ to a control means (14) of said stability control system, such that said signal is used to assess the plausibility of one or more inputs (12) of said stability control system.

5.  A method according to Claim 4, wherein a said input comprises a wheel speed input (12).

Fig. 1

EP 1 151 877 A1

EP 1 151 877 A1

## EUROPEAN SEARCH REPORT

Application Number
EP 00 10 9399

**European Patent Office**

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 415 423 A (NISSAN MOTOR) 6 March 1991 (1991-03-06) | 1,3-5 | B60G17/015 G01P15/08 |
| A | * page 8, line 48 - page 9, line 35; figures 1,3,5-8,11-17 * | 2 | |
| X | PATENT ABSTRACTS OF JAPAN vol. 016, no. 585 (M-1347), 25 December 1992 (1992-12-25) & JP 04 231205 A (NISSAN MOTOR CO LTD), 20 August 1992 (1992-08-20) | 1,3-5 | |
| A | * abstract * * column 4, line 21; figures 2,4,6 * | 2 | |
| X | US 4 690 431 A (INOUE NAOHIKO ET AL) 1 September 1987 (1987-09-01) | 1 | |
| A | * column 8, line 54 - line 62; figures 2,4,5,7-9 * | 2-5 | |
| X | US 4 679 808 A (ITO KEN ET AL) 14 July 1987 (1987-07-14) | 1 | |
| A | * column 4, line 22 - line 59; figures 1,8,10 * | 2-5 | TECHNICAL FIELDS SEARCHED (Int.Cl.7) B60G G01P |
| X | DE 196 32 363 C (TELEFUNKEN MICROELECTRON) 15 January 1998 (1998-01-15) | 1 | |
| A | * claims 1,6; figures 1,2 * | 2 | |
| A | EP 0 326 180 A (NISSAN MOTOR) 2 August 1989 (1989-08-02) | | |

The present search report has been drawn up for all claims

| Place of search | Date of completion of the search | Examiner |
|---|---|---|
| THE HAGUE | 13 September 2000 | Tsitsilonis, L |

## ANNEX TO THE EUROPEAN SEARCH REPORT
## ON EUROPEAN PATENT APPLICATION NO.

EP 00 10 9399

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2000

| Patent document cited in search report | | Publication date | Patent family member(s) | | Publication date |
|---|---|---|---|---|---|
| EP 0415423 | A | 06-03-1991 | JP 2611449 B | | 21-05-1997 |
| | | | JP 3090412 A | | 16-04-1991 |
| | | | DE 69003909 D | | 18-11-1993 |
| | | | DE 69003909 T | | 05-05-1994 |
| | | | US 5092624 A | | 03-03-1992 |
| JP 04231205 | A | 20-08-1992 | JP 2946758 B | | 06-09-1999 |
| US 4690431 | A | 01-09-1987 | JP 1849674 C | | 07-06-1994 |
| | | | JP 5057146 B | | 23-08-1993 |
| | | | JP 61067666 A | | 07-04-1986 |
| | | | DE 3532222 A | | 20-03-1986 |
| US 4679808 | A | 14-07-1987 | JP 1971929 C | | 27-09-1995 |
| | | | JP 6104455 B | | 21-12-1994 |
| | | | JP 61211165 A | | 19-09-1986 |
| | | | DE 3608420 A | | 25-09-1986 |
| DE 19632363 | C | 15-01-1998 | NONE | | |
| EP 0326180 | A | 02-08-1989 | JP 2037014 A | | 07-02-1990 |
| | | | JP 2503254 B | | 05-06-1996 |
| | | | DE 68909257 D | | 28-10-1993 |
| | | | DE 68909257 T | | 28-04-1994 |
| | | | US 4948164 A | | 14-08-1990 |

EPO FORM P0459

For more details about this annex : see Official Journal of the European Patent Office, No. 12/82